# EUROPEAN PATENT APPLICATION

(11) **EP 1 703 503 A2**
(43) Date of publication of application: **20.09.2006**
(21) Application number: 06111059.9
(22) Date of filing: 13.03.2006
(51) Int. Cl.: G11B 7/125, G11B 7/007, G11B 27/19

(54) **Apparatus and method for improving deviation of optimum power calibration**

(30) Priority: 14.03.2005 KR 2005020935
(71) Applicant: Samsung Electronics Co., Ltd., Suwon-si, Gyeonggi-Do (KR)
(72) Inventor: Yu, Jin-woo, Gyeonggi-do, Suwon-si (KR); Lee, Tae-hoon, Dongjak-gu, Seoul (KR)
(74) Representative: Waddington, Richard

(57) **Abstract**

A method of improving a problem of a deviation of an optimum recording optical power, which is capable of reducing deviation of OPC (Optical Power Calibration) power and shortening a Lead-in time by previously setting an area in which an OPC operation may be conducted and erasing the area with an erase power.

## Description

The present invention relates to an optical recording device, and, more particularly, but not exclusively, to a technique capable of reducing a deviation of an Optimum Power Calibration (Optimum Power Calibration) operation and of improving speed.

In an optical recording/reproducing device, using an irradiated beam with accurate power to record information on an optical recording medium is important. Due to environments of combinations of all recording media and recording devices and also deviation between devices, such an accurate power may not be provided substantially all the time (e.g., by recording on a disk in advance).

Thus, in order to find out an optimum optical power for a recording operation, an optical recording/reproducing device generally conducts an OPC (Optimum Power Calibration) operation in a test area of the optical disk inserted therein to detect an optimum optical power (Popt), and uses the detected optimum recording optical power in a recording operation.

The test area is particularly reserved for recording test patterns. Such a reserved area is, for example, known as a Disk Test Zone or an OPC Test Zone. Such a test area may be configured as one successive region or as a plurality of sub regions.

That is to say, an optical disk drive system controls a laser power (or, recording power) level required to record data on a corresponding optical disk through a Power Calibration Area (PCA), when conducting a recording mode for a once recordable optical disk such as CD-R and DVD-R. This is called Optimum Power Control (OPC).

However, though an optimum recording power is obtained via an OPC operation, if an environment for recording is changed by the time an actual recording operation is conducted, producing an accurate recording characteristic may be impossible. For example, the optimum recording power determined by an OPC operation may be changed, and, thus, a Beta (or, an asymmetry) of recorded signals may also be changed to produce inaccurate recording characteristics. This could occur in the following exemplary cases: where a power sensitivity is generated at each position on the optical disk, where a wavelength of LD is shifted due to high temperatures, and a deviation is generated on beam spot due to a disk skew phenomenon, varying thicknesses of disks or a resulting defocus of the beam spot on the disks, and/or where disk and/or optical conditions are changed due to a fact that an actual recording may not be conducted until a long time after the OPC.

In order to solve these problems, there has been proposed a method for β compensation by repeatedly recording and measuring test data while changing a recording optical power little by little.

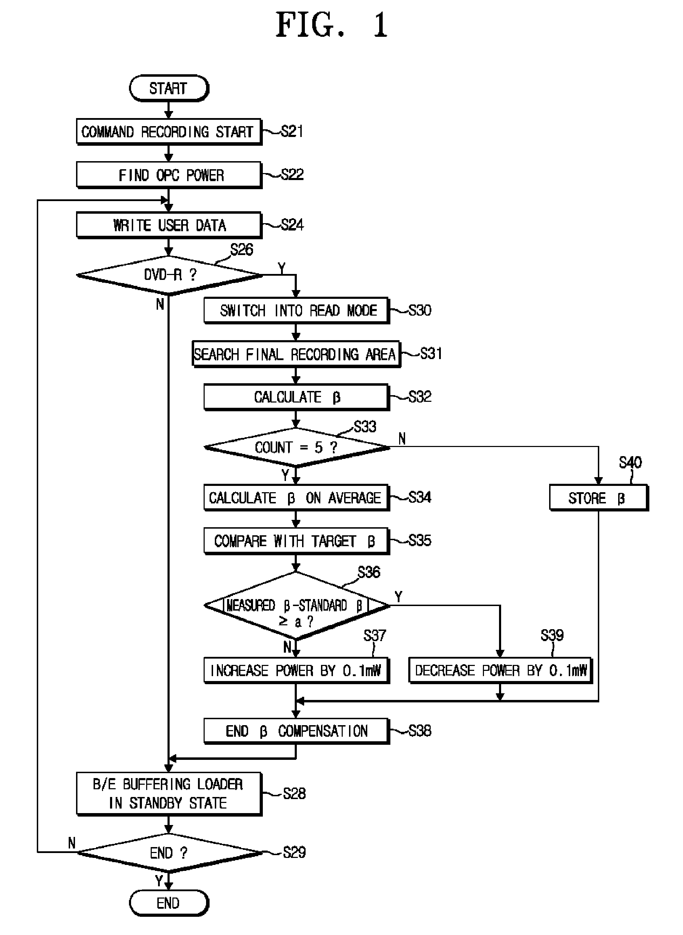

Hereinafter, the recording optical power compensation method of the related art as discussed above is described with reference to FIG. 1.

As shown in FIG. 1, an optical disk is inserted into the apparatus, a recording operation is requested (21), and an OPC operation is conducted in the Power Calibration Area (PCA) of the optical disk before the recording operation to determine an optimum recording power (22). That is to say, an optimum optical power corresponding to an optimum beta value given to each MID is detected.

According to the related art, generally, a test recording is made in a certain area of the optical disk using the optimum recording power detected by the OPC. Then, a Radio Frequency (RF) level of the recording signal in the area is measured to set a target beta.

The detected recording power is recorded as a user data of the disk (24). Then, whether a recording medium is a DVD-R (26) is determined. If the recording medium is determined to be a DVD-R (or a CD-R, where appropriate) in operation 26, a beta β compensation operation is conducted.

In order to conduct the β compensation operation, a mode is switched to a read mode, namely a loader is switched into a standby mode (30), and a finally recorded area is found (31).

Based on the RF level measured at the recorded area in operation 31, a beta β value is calculated through an OPC operation (32). At this time, the RF level is calculated by measuring Top/Center/Bottom levels.

In a common OPC (Optical Power Calibration) operation, a controller of the system applies a control signal to an optical drive and simultaneously varies a recording optical power little-by-little based on a target recording optical power (e.g., 8 mW) that is detected from the optical disk. Meanwhile, the optical drive outputs a recording signal for test data with an optical power corresponding to the applied control signal, and an optical pickup records a certain amount of test data in a test area of the PCA.

If the test data is completely recorded, the system controller controls the optical pickup to read out the read test data in order, and then detects a β value from a regenerated RF signal that is output from an R/F unit.

In addition, the system controller checks on how many measurements of the detected β value have been conducted (which is set to 5 times in the example of FIG. 1) (33), stores the measured β value in an internal memory if the measurements have been conducted less than 5 times (40), and calculates an average of the measured β values if the measurements have been conducted over 5 times (34).

The average value calculated in operation 34 is compared with the β value (or, the target β value) of the optical disk that is detected in operation 22 (35). If an absolute value of the difference between the measured β value and the target β value is found to be greater than a predetermined level (or, an allowable range: a), the recording power is decreased as much as 0.1 mW (39) . In contrast, if the absolute value of the difference between the measured β value and the target β value is less than a predetermined level, the recording power is increased as much as 0.1 mW (37). Then, the β compensation operation is completed (38).

If the recording medium is found to not be a DVD-R in operation 26 or after the β compensation operation is conducted, the loader progresses in a standby state until the next recording (28) operation, and then the process is ended (29). Otherwise, the process proceeds to operation 24 to record data in a user data area of the disk with the optimum optical power detected in the above operation.

However, a problem exists in that the detected optimum optical power may generate a jitter due to a serious deviation of the recording optical power (commonly, not smaller than 0.4 mV) after a full DC erasing for the recording optical power the reserved PCA found first by an OPC operation in a non-recorded area of a new disk. Thus, the OPC operation may not be applicable to a Blu-ray set.

In addition, the Blu-ray set requires a relatively large amount of time to search an area that is required for an OPC operation in comparison to a common optical disk.

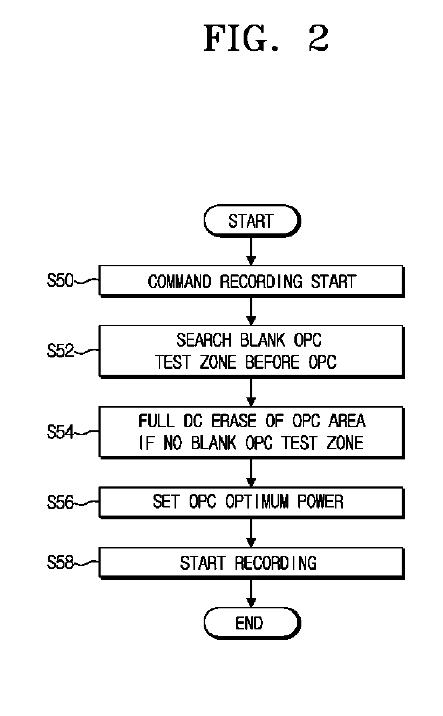

That is to say, referring to FIG. 2, if a Blu-ray disk is inserted and a recording operation is requested (50), the system controller searches a Bland area for an OPC operation in an OPC test zone of the Blu-ray disk (hereinafter, referred to as a Physical ADIP (Address in Pre-groove) Address (PAA) area) (52), before the recording operation. In addition, if a blank area is not found, all of the PAA area is erased using an erase DC power (54) operation.

Thereafter, user data is recorded in the PAA area through a power swing operation and an optimum recording optical power is detected by measurement and a Kappa Curve (56). Then, a recording signal is recorded via an optical driving current corresponding to the optimum recording optical power (58).

A common Blu-ray set requires 5 seconds on an average to conduct operation 52 in the above procedure, and about 30 seconds to execute operation s54.

Thus, since at least 5 seconds and up to 35 seconds are required to set the PAA area, an entire recording time may be reduced by decreasing the area searching time.

The present invention is designed to solve the above and/or other problems of the related art, and, therefore, an aspect of the present invention provides a method and apparatus capable of reducing a deviation of an optimum recording optical power in a Blu-ray disk and of reducing a recording time.

According to the present invention there is provided an apparatus and method as set forth in the appended claims. Preferred features of the invention will be apparent from the dependent claims, and the description which follows.

According to an aspect of the invention, there is provided a method of setting an optimum recording optical power of a recording medium, which includes setting a test data recording area for measuring the optimum recording optical power of the recording medium; recording the test data after erasing the set recording area with erase power; and detecting the recorded data and then setting the optimal recording optical power.

Preferably, the test data recording area is set using target address and length to which the test data is to be recorded, and the length is set to 5 tracks.

The test data may be recorded in front of a middle tract of the set recording area so as to decrease crosstalk.

The recording medium may be an optical disk, a Blu-ray disk, or a similar type of disk.

In addition, the setting of the test data recording area preferably includes reading finally recorded address and length; generating a new address by adding the length to the read address; and generating a new length by allocating a predetermined track to the new address.

The finally recorded address and length may be stored in and then read from a non-volatile memory or a user data area of the recording medium.

In addition, the method of setting an optimum recording optical power according to the present invention may further include recording data in the recording medium with the set optimum recording optical power so that data may be recorded using the optimum recording optical power.

In another aspect of the invention, there is provided an apparatus for setting an optimum recording optical power of a recording medium, which includes an optical drive for outputting an intensity drive signal according to an input signal; an optical pickup for recording signals in the recording medium according to the intensity drive signal of the optical drive and also detecting a recording signal from a recording surface; and a controller for setting an area on which a test data for measuring the optimum recording optical power of the recording medium is to be recorded, for controlling the optical drive to record the test data in the set recording area after erasing the set recording area with erase power, and for detecting the recorded data to set the optimum recording optical power.

Preferably, the test data recording area is adapted to be set using target address and length to which the test data is to be recorded, and the length is set to 5 tracks, and the test data is recorded in front of a middle tract of the set recording area.

In addition, the recording medium may be an optical disk.

The controller may be operable to generate a new address by reading finally recorded address and length and then adding the length to the read address, and at the same time is operable to set the test data recording area by generating a new length by allocating a predetermined track to the new address.

In addition, the finally recorded address and length are preferably stored in a non-volatile memory or a user data area of the recording medium.

Additional and/or other aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a flowchart illustrating a conventional recording optical power compensation method;
FIG. 2 is a flowchart illustrating an OPC test zone searching process of a conventional Blu-ray set;
FIG. 3 shows an optical disk device to which an improved method for reducing deviation and recording time according to an embodiment of the present invention is applied; and
FIG. 4 is a flowchart illustrating an OPC test zone of a Blu-ray set of according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

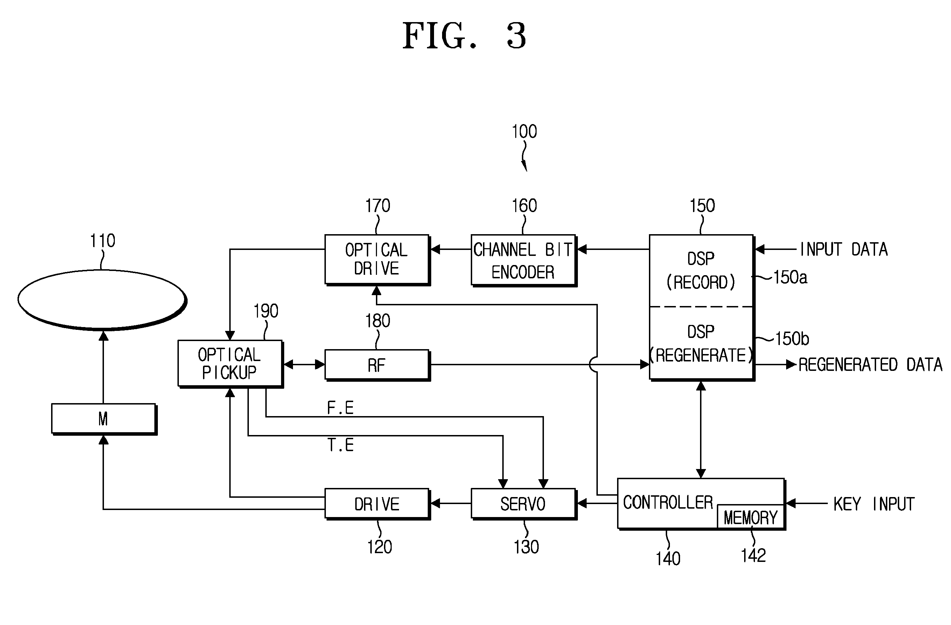

FIG. 3 shows an optical disk device to which an improved method to reduce a deviation of an OPC operation and a recording time, according to an embodiment of the present invention, is applied. As shown in FIG. 3, the optical disk device 100 includes a digital recording signal process140)or (DSP RECORD) 150a to add an error correction code (ECC) to input digital data so as to convert the input digital data into a recording format, a channel bit encoder 160 to re-convert the data that is converted into the recording format into a bit stream, an optical drive 170 to output an intensity drive signal according to an input signal, an optical pickup 190 to record signals on an optical disk 110 according to the intensity drive signal and to detect a recording signal from a recording surface, an R/F unit 180 to filter and shape the signal detected by the optical pickup 190 to output the signal as a binary code, a drive unit 120 to drive a spindle motor M that rotates the optical pickup 190 and the optical disk 110, a servo unit 130 to receive a tracking error signal (TE) and a focus error signal (FE) of the optical pickup 190 and a rotating speed of the optical disk 110 and to control an operation of the drive unit 120, and a digital regenerated signal processor (DSP REGENERATE) 150b to restore the binary signal into an original data with its own clock synchronized to the binary signal output from the R/F unit 180.

A controller 140 optimally controls a recording optical power via a β value detected from a regenerated RF signal of recorded data and a power increase level that is set for each recording speed in consideration of the characteristic changes of the inserted optical disk 110 or the optical pickup 190 during the recording operation. The controller 140 calculates the β value by measuring Top/Bottom levels of the RF level in the recording area using commonly understood methods.

In addition, the controller 140 includes a memory 142 that stores a Physical ADIP Addresses (PAA) area and lengths of data finally recorded in the PAA area. Thus, if the optical disk is inserted and a recording operation is requested, the controller 140 reads the PAAs and lengths that are stored in the memory 142, selects a target PAA and length, and then controls the optical drive 170 to unconditionally erase the selected PAA and length using an Erasing Power.

Though the controller 140 has been described as including the internal memory 142, a use of a non-volatile memory such as NVRAM is also possible.

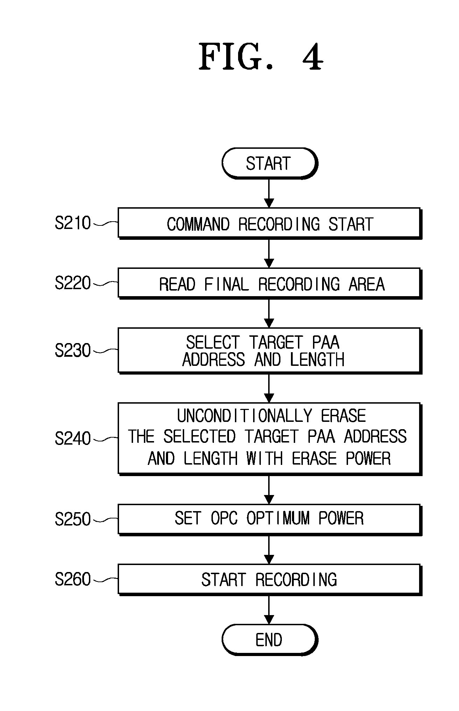

Hereinafter, a process of searching an OPC test zone in a Blu-ray disc, according to an embodiment of the present invention, is described with reference to FIG. 4. As shown in FIG. 4, if an optical disk is inserted and a recording operation is requested (210), the controller 140 reads the last recorded area stored in the memory 142 so as to prepare to conduct a new OPC operation (220). That is to say, in operation 220, the controller 140 reads a PAA area and a length of an area that is stored in the memory 142 at which the last OPC operation was carried out.

The controller 140 then designates a new PAA area and length , in which a new OPC operation is conducted, in contrast to the PAA area and length read in operation 220 (230). Generally, the length is set to 5 tracks, and a test data record to actually execute the OPC operation is, according to an embodiment of the invention, recorded in a front of a middle tract of the set length in order to decrease crosstalk that may occur.

Thereafter, the controller 140 unconditionally erases the area required to conduct the OPC operation by using an erase power with reference to the set PAA area and length (240). That is to say, the controller 140 operates the optical drive 170 regardless of the fact that the corresponding area may have been used in a recording operation or not. As a result, the optical pickup 190 forcibly erases the corresponding area once. According to the test results, an OPC recording deviation of the same set or the same disks is less than 0.1%, and a recording power was measured in the range of ±5%. Thus, the OPC operation discussed above may be applicable for the Blu-ray set.

In addition, about 0.5 seconds are taken to forcibly erase the corresponding area. Thus, while the OPC area is set in about 0.5 seconds, the conventional methods required 5 to 35 seconds since approximately 5 seconds were required to search a Bland APP area and approximately 30 seconds were required to forcibly erase all of the PAA areas when there was no Blank PAA area. Thus, the present invention enables a reduction in operating time by at least 4.5 seconds and up to 34.5 seconds.

Test data is recorded in the erased PAA area through a power swing and then an optimum recording optical power is detected using measurement and an application of a Kappa Curve (250). Then, a recording signal is recorded using an optical drive power corresponding to the detected optimum recording optical power (260). Operations 250 and 260 are executed to record test data and to search an optimum recording optical power as in the conventional method. As such these operations are not described in detail here.

In addition, though the finally recorded PAA area was described as being stored in a memory, it is also possible that the finally recorded PAA is recorded in a user area of the disk and that the relevant data is read in the user area before conducting the OPC operation. Thus, where the data is stored in a non-volatile memory, the data may not be used in another disk device. However, if the data is recorded in the user area as in the above, the data may be used though a disk device is changed, effectively. The controller 140 previously sets target PAA area and length and erases data once with an erase power and then records the test data so as to measure an optimum optical power. Since, the process of recording the target PAA area and length is well known in the art the process is not described in detail here.

As is mentioned above, the controller 140 previously sets a PAA area to conduct an OPC operation and then erases the area with an erase power in the process of searching for an optimum recording optical power, which may shorten time and reduce power deviation since the same processor is applied.

According to the method and apparatus to improve deviation of an optimum recording optical power of the present invention, an OPC recording power deviation may be improved and then applied to a Blu-ray set, and a Lead-in time may be reduced by at least 4.5 seconds up to 34. 5 seconds, which allows faster recording operation.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of setting an optimum recording optical power of a recording medium, comprising:
setting a test data recording area in which the optimum recording optical power of the recording medium is measured;
recording the test data after erasing the set recording area with an erasing power; and
detecting the recorded data and then setting the optimal recording optical power based on the measurement of the optimum recording optical power.

2. The method according to claim 1, wherein the test data recording area is set using target addresses and lengths to which the test data is to be recorded.

3. The method according to claim 2, wherein the setting of the test data recording area comprises:
reading a previously finally recorded address and length;
generating a new address by adding the read length to the read address; and
generating a new length by allocating a predetermined track to the new address.

4. The method according to claim 2 or claim 3, wherein the previously final recorded address and length are stored in a non-volatile memory.

5. The method according to any one of claims 2 to 4, wherein the finally recorded address and length are stored in a user data area of the recording medium.

6. The method according to any one of claims 2 to 5, wherein the length is set to 5 tracks.

7. The method according to claim 6, wherein the test data is recorded in a front of a middle tract of the set recording area.

8. The method according to any preceding claim, wherein the recording medium is an optical disk.

9. The method according to any preceding claim, wherein the recording medium is a Blu-ray disk.

10. The method according to any preceding claim, further comprising recording data in the recording medium with the set optimum recording optical power.

11. An apparatus to set an optimum recording optical power of a recording medium, comprising:
an optical drive (170) to output an intensity drive signal according to an input signal;
an optical pickup (190) to record signals in the recording medium (110) according to the intensity drive signal of the optical drive (170) and to detect a recording signal from a recording surface; and
a controller (140) to set an area on which test data to measure the optimum recording optical power of the recording medium (110) is to be recorded, to control the optical drive (170) to record the test data in the set recording area after erasing the set recording area with an erase power, and to detect the recorded data to set the optimum recording optical power.

12. The apparatus according to claim 11, wherein the test data recording area is set using a target address and length to which the test data is to be recorded.

13. The apparatus according to claim 11 or claim 12, wherein the length is set to 5 tracks.

14. The apparatus according to any one of claims 12 to 13, wherein the test data is recorded in a front of a middle tract of the set recording area.

15. The apparatus according to any one of claims 11 to 14, wherein the recording medium (110) is an optical disk.

16. The apparatus according to any one of claims 11 to 15, wherein the recording medium (110) is a Blu-ray disk.

17. The apparatus according to any one of claims 11 to 16, wherein the controller (140) is operable to generate a new address by reading a previously final recorded address and length and then adding the read length to the read address, and is operable to simultaneously set the test data recording area by generating a new length by allocating a predetermined track to the new address.

18. The apparatus according to claim 17, further comprising a non-volatile memory (142) to store the previously final recorded address and length.

19. The apparatus according to claim 17 or claim 18, wherein the finally recorded address and length are stored in a user data area of the recording medium (110).

20. A method of setting an optimum recording optical power of a recording/reproducing apparatus for use with a recording medium (110) that has been inserted into the apparatus when a recording operation is requested, the method comprising:
determining a location of an area of the medium (110) on which a last recording operation took place;
selecting a new area on which to conduct an optimum power control operation based on the determined location of the area of the medium (110) on which the last recording operation took place;
erasing any data on the new area of the medium (110);
conducting an optimum power control operation on the new area of the medium (110) to determine an optimum recording power of the apparatus;
setting the recording power of the apparatus at the determined optimum recording power; and
conducting the requested recording operation.

21. The method according to claim 20, wherein the determining of the location of the area of the medium (110) on which the last recording operation took place comprises reading a physical address and length of the area of the medium (110).

22. The method according to claim 20 or claim 21, wherein the erasing comprises operating an optical drive (170) of the apparatus irrespective of there being data on the new area of the medium (110).

23. A controller (140) of a recording/reproducing apparatus to perform a requested recording operation on a recording medium (110) that is inserted into the apparatus, the controller (140) being designed to set an area of the medium (110) on which test data, which is used to measure an optimum recording optical power of the medium (110), is to be recorded, to erase the set area, to conduct an optimum recording optical power operation to determine the optimum recording optical power area by recording the test data in the set area, and to perform the requested recording operation.

24. The controller (140) according to claim 23, wherein the set area is located at a location read by the controller (140) after a location at which a previous final recording operation took place.

25. A recording/reproducing device, to which an improved method to reduce a deviation of an Optimum Power Control, OPC, operation and a recording time of a recording operation is applied, the device being designed to output a drive signal, based on data to be recorded, to an optical pickup (190) that is operable to record the data on a medium (110) according to the drive signal and to detect a recording signal reflected from the medium (110), the recording signal being binarized and, then, regenerated, the device comprising:
a controller (140) to read a location of a last recorded area on the medium (110), to select a new area based on the location of the last recorded area in which to conduct an OPC operation, to erase the new area, to conduct the OPC operation to determine an optical recording power at the erased new area, and to proceed with the recording operation while employing the determined optical recording power.
